# EUROPEAN PATENT APPLICATION

(11) **EP 0 985 340 A2**
(43) Date of publication of application: **15.03.2000**
(21) Application number: 99306992.1
(22) Date of filing: 03.09.1999
(51) Int. Cl.: A01K 1/01

(54) **Cleaning machine**

(30) Priority: 03.09.1998 GB 9819552
(71) Applicant: Richardson, Peter Allan, Grinsdale, Carlisle CA5 6DS (GB)
(72) Inventor: Richardson, Peter Allan, Grinsdale, Carlisle CA5 6DS (GB)
(74) Representative: Walsh, David Patrick

(57) **Abstract**

A cleaning machine (10) comprises attachment means for attaching the cleaning machine to a vehicle (12), and adjustable cleaning device support means (18) which are operable to receive a cleaning device and supply cleaning fluid thereto, wherein the cleaning device support means are operable to adjust the height of a cleaning device supported by the cleaning device support means.

## Description

This invention relates to a cleaning machine.

An existing method of cleaning the interior of a chicken house involves removing solid material with a digger, brushing that material away and then using water spray guns operated by a user. The user simply sprays the interior of the house and washes all the dust, feathers and the like from the walls and ceiling of the house to the floor, from where it can be swept away or washed away.

Disadvantages arise with this method, because the user of the water sprayer invariably becomes very wet and also the dirt washed from the walls and ceiling of the chicken often falls on to the cleaner.

It is an object of the present invention to address the above-mentioned disadvantages.

According to one aspect of the present invention a cleaning machine comprises attachment means for attaching the cleaning machine to a vehicle, and adjustable cleaning device support means which are operable to receive a cleaning device and supply cleaning fluid thereto, wherein the cleaning device support means are operable to adjust the height of a cleaning device supported by the cleaning device support means.

The cleaning machine may include a cleaning device attached to the cleaning device support means.

The cleaning fluid may be high pressure water.

The cleaning device support means may include a support surface which is arranged to receive a cleaning device. The support surface may be vertically adjustable, preferably by means of a length-adjustable support arrangement.

The length-adjustable support arrangement may comprise a plurality of inter-linked support members, which are preferably pivotally interlinked. Movement of one said support members may result in movement of the remainder of the support members. The support arrangement is preferably powered from a lower support member, preferably a lowermost support member.

The cleaning device support means may include more than one cleaning device receiving portion. The cleaning device support means may include one or more of a substantially vertically aligned cleaning device receiving portion, a substantially forward aligned cleaning device receiving portion, and/or a substantially laterally-aligned cleaning device receiving portion. Preferably, all three of the above are provided. Left and/or right laterally aligned cleaning device receiving portions may be included.

The cleaning machine may include a power input portion, which may receive hydraulic power, preferably from a vehicle to which the machine is arranged to be attached. The cleaning machine may include a cleaning fluid input portion, which is preferably ranged to receive cleaning fluid from a supply mounted on said vehicle.

The cleaning machine may include a cleaning device comprising at least two laterally spaced projections, preferably for delivering cleaning fluid to a surface to be cleaned, which cleaning device may be operable to tilt relative to the support surface.

The cleaning device may be arranged to extend approximately perpendicularly from the, preferably approximately horizontal, support surface.

The cleaning device may be ranged to extend laterally from the cleaning device support means, preferably from a lateral edge of the support surface.

The cleaning device may be arranged to extend from a front edge of the cleaning device support means. In which case the cleaning device preferably extends beneath an upper surface of the cleaning device support means.

The cleaning machine may include a cleaning device comprising a single projection, preferably for delivering cleaning fluid to a confined space, most preferably a ventilation flue, for cleaning. In this case the cleaning device may be operable to turn about a generally vertical axis. The cleaning device may include twin openings, for ejecting cleaning fluid, preferably from substantially opposite sides of said projection.

The cleaning machine may include a cleaning device comprising at least two laterally spaced projections having openings for ejecting cleaning fluid directed towards each other. The openings may be arranged to direct fluid downwardly onto an object to be cleaned, which object may be a suspended feeding pan. The laterally spaced projections may be offset, with one projection leading the other in a forwards movement of the device.

The cleaning machine may include one or more of the cleaning devices described above supplied for subsequent fitting to the cleaning machine.

The attachment means may comprise interengaging portions of a vehicle and the cleaning machine, which may comprise interlocking inverted "v" shaped members.

The cleaning device described above may integral with a vehicle, instead of being attached thereto.

According to a further aspect of the present invention a cleaning machine comprises cleaning fluid ejection means located in a housing having a substantially open bottom portion, wherein the cleaning fluid ejection means are mounted for rotation and are operable to eject cleaning fluid generally forwards onto a surface to be cleaned and the cleaning fluid ejection means are operable to be driven in the same forward direction.

The cleaning machine may include attachment means for attaching the cleaning means to a vehicle.

The fluid ejection means may include two or more fluid ejection members, which may be located side by side.

The two fluid ejection members may be located in separate sections of the housing.

A one way opening my be provided between the separate sections, to allow cleaning fluid to pass between the sections in one direction only.

The housing may have flexible skirts along at least front and side lower edges thereof

According to another aspect of the present invention a cleaning machine comprises attachment means for attaching the cleaning machine to a vehicle and cleaning fluid ejection means located in a housing having a substantially open bottom portion, wherein at least front and side lower edges of the housing have flexible skirts which are ranged to allow dirt on a surface to be cleaned to enter the housing and to deter the exit of mist generated by the cleaning fluid ejection means.

The cleaning fluid ejection means may comprise at least one spray bar. The cleaning fluid ejection means may be operable to turn about a generally vertical axis, to provide a leading end of said cleaning fluid ejection means and a trailing end thereof

The cleaning fluid ejection means may be operable to urge material dislodged by cleaning fluid ejected from the cleaning fluid ejection means from said leading end towards said trailing end. The cleaning machine may be operable to direct said material beneath a side wall of said housing, preferably through or beneath said skirts.

The cleaning fluid ejection means may be operable to eject cleaning fluid at a pressure of at least 100 bar, preferably at a rate of less than 60 litres per minute.

All of the features disclosed herein may be combined with any of the above aspects, in any combination.

Specific embodiments of the present invention will now be described, by way of example, and with reference to the accompanying drawings, in which:
Figure 1 is a schematic side view of a cleaning machine secured to a tractor;
Figures 1a and 1b are schematic perspective views of an attachment mechanism for the cleaning machine;
Figure 2 is a schematic partial front view of the cleaning machine;
Figure 3 is a partial schematic view from above of the cleaning machine;
Figure 4 is a schematic front view of the cleaning machine in an extended position with a foam lance attached;
Figure 5 is a partial schematic front view of the cleaning machine in an extended position with an extractor flue cleaner attached;
Figure 6 is a partial schematic front view of the cleaning machine in a partially extended position with a wash off lance attached;
Figure 7 is a partial schematic front view of the cleaning machine in a retracted position with a side wall lance attached;
Figure 8 is a partial schematic side view of the cleaning machine with a swan neck attachment;
Figure 9 is a partial schematic side view of the cleaning machine with a pan washing attachment for cleaning a pan feeding system;
Figure 10 is a partial schematic side view of the pan washing attachment in use;
Figure 11 is a partial schematic front view of the cleaning machine with a trough washing attachment secured thereto;
Figure 12 is a partial schematic side view of the trough washing attachment;
Figure 13 is a partial schematic side view of an alternative embodiment of cleaning machine secured to a tractor;
Figure 14 is a partial schematic front view of the alternative embodiment of cleaning machine; and
Figure 15 is a partial schematic view from above of the alternative embodiment of cleaning machine;
Figure 16 is a partial schematic view from above of an alternative spraying arrangement for the alternative embodiment.

A cleaning machine 10 is secured to a tractor 12 by an A frame 14. The tractor carries a water tank 16 for supplying the cleaning machine 10. The cleaning machine comprises a table 18 to which a variety of cleaning attachments can be secured. The table 18 is vertically adjustable by means of a scissor arrangement 20, to allow the cleaning of upper parts of walls and ceilings inside a building.

In more detail, the scissor arrangement 20 comprises two sets 22a and 22b interlinked cross members 24. The cross members 24 are pivotally secured to an adjacent cross member at their ends and also to other adjacent cross members halfway along their length. A hydraulic piston 26 is secured to a lower one of the cross members 24 at one end and to the base of the cleaning machine at its other end. The hydraulic piston 26 is operable to push the cross member 24 to which it is attached upwards, thereby causing the table 18, which is mounted on top of the scissor arrangement 20 to be moved upwards. The scissor arrangement 20 functions by the pivoting end joints of adjacent cross members 24 approaching each other to give additional height to the scissor arrangement 20. The table 18 can be lowered by releasing the fluid pressure in the hydraulic piston 26.

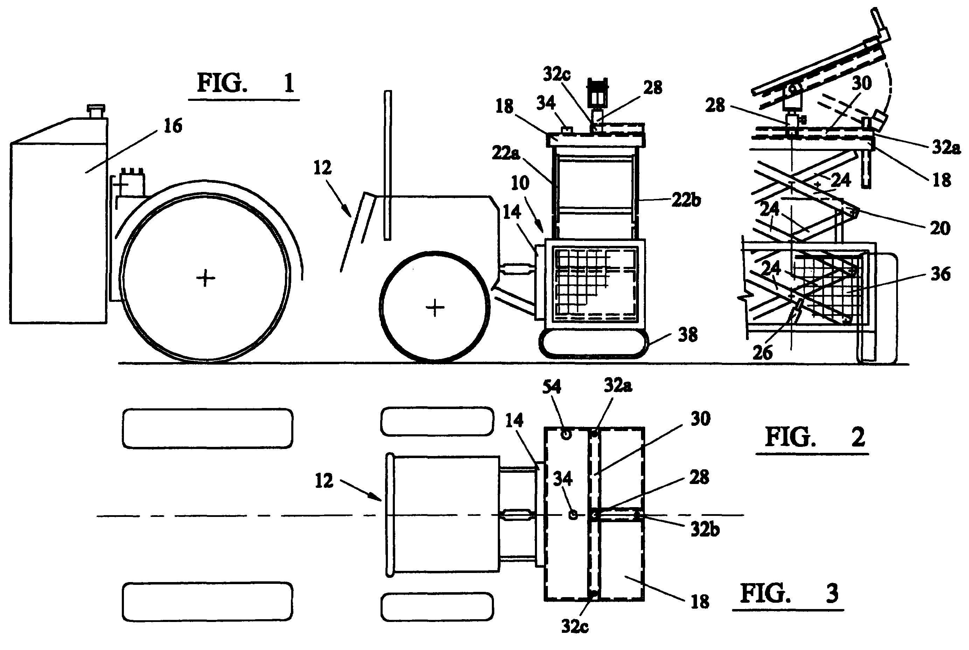

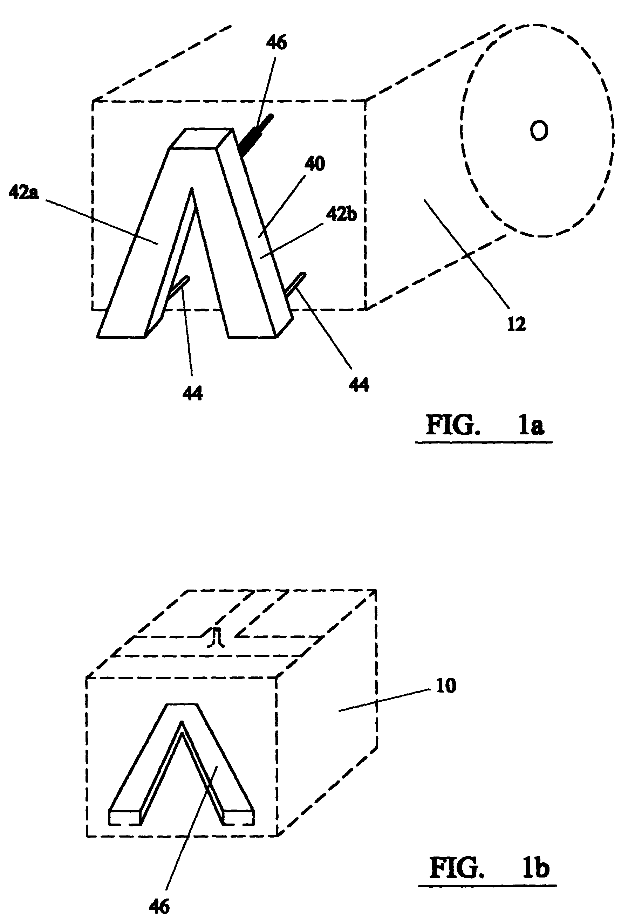

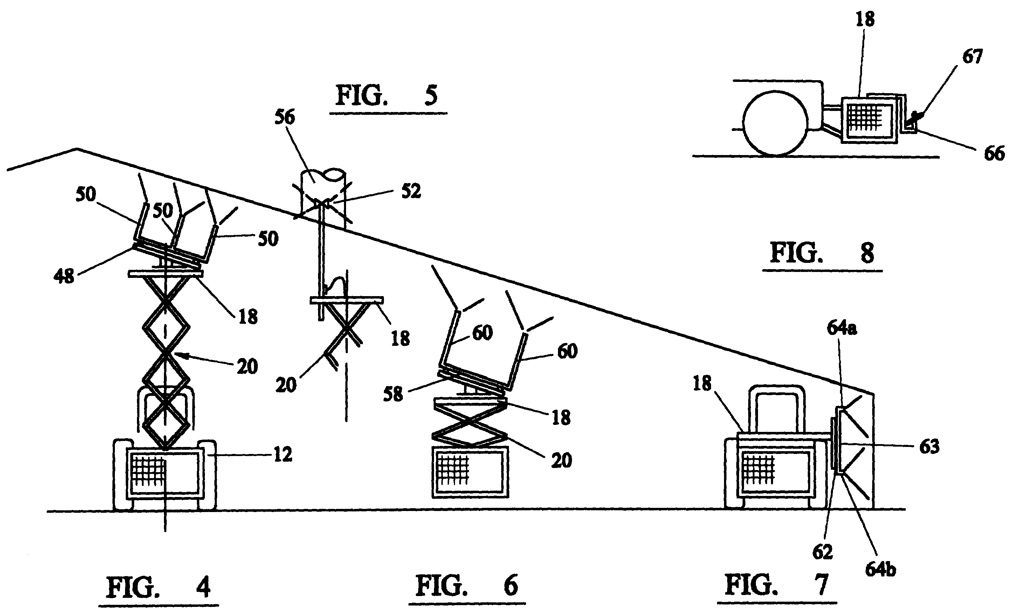

The table 18 includes a number of attachments points for various cleaning attachments. A central spur 28 allows a cleaning attachment to be centrally located on the table 18 (see Figure 1). Further attachment points are provided by a hollow rectangular cross section T piece 30, the ends, 32a, 32b and 32c of which provide openings in which cleaning attachments can be received.

The table 18 also includes an HP connector 34 for providing high pressure water to the cleaning attachments, which will be described below.

The cleaning machine 10 has a wire mesh frame 36 to prevent access to the scissor arrangement 20. The cleaning machine 10 also has support portions 38 for supporting the machine when it is not secured to the tractor 12.

The A frame as shown in Figure 1a comprises a triangular steel support 40 having limbs 42a and 42b with a square cross section. The support 40 is secured to the front end of the tractor 12 by struts 44. The support 40 can be moved up and down with a hydraulic ram 46. Figure 1b shows the rear of the cleaning machine 10, which includes an A shaped channel section 46 which is arranged to be placed over the support 40 on the tractor 12. A supply line (not shown) to supply water from the water tank 16 to the cleaning machine 10 passes from the front of the tractor 12 to the cleaning machine 10.

Figure 4 shows a foam lance cleaning attachment 48 secured to the table 18, which is an extended position, by virtue of the scissor arrangement 20 being extended. In the extended position, the scissor arrangement 20 projects forwards slightly from the tractor 12 to prevent any material dislodged during cleaning from falling onto the tractor operator. The foam lance 48 comprises three prongs 50 which are supplied with foam for spraying on to the ceiling of a building to be cleaned. The foam from each prong 50 is sprayed out, typically in a jet having about 40° side to side coverage. Due to the angle of the spray from the three prongs 50 a three metre wide section of ceiling can be sprayed at one pass of the foam lance 48. The spacing of the prongs 50 allows the lance 48 to traverse a ceiling whilst passing to either side of feeding pans described below.

The foam lance can be angled as shown in Figure 4 to match the angle of slope of a ceiling to be cleaned. Also, the foam lance can be rotated about a vertical axis so that when the tractor move forwards one of the prongs 50 leads the remaining two prongs 50 as the tractor 12 advances along the length of a building.

Figure 5 shows a rotary washer 52 for cleaning an extractor flue in a chicken house building. The rotary washer is fixed to the table 18 in the opening 54 (see Figure 3). The rotary washer 52 is able to rotate by 360° to either side of its initial position. Jets located on the side of the rotary washer spray water supplied from the water tank 16 to clean the flue 56. In order to put the rotary washer 52 in position, the scissor arrangement 20 is extended when the rotary washer 52 is beneath the flue 56.

In Figure 6, the table 18 is shown partially extended and carrying a wash off lance 58 which comprises two prongs 60 through which water is sprayed at a ceiling. The wash off lance 58 can be turned about a vertical axis and tilted, as shown in Figure 6, in the same way as described in relation to the foam lance 48.

In use, the wash off lance 58 is tilted to match the angle of a ceiling to be cleaned. The lance is also rotated slightly so that one of the prongs 60 leads the other prong. The leading prong is the higher of the two, i.e. the one shown on the left in Figure 6. In this way, water sprayed from the higher, leading prong 60 causes dirt to be dislodged from the ceiling which flows the slope of the ceiling. The separation of the two prongs 60, and the distance by which a prong leads, is arranged so that the water has flowed from the upper prong to the area sprayed by the lower, rear prong 60 by the time the rear prong approaches that water. In this way, the dirty water is guided down the slope of the ceiling so that it can more efficiently flow towards the lower end of the ceiling and run to the floor where it can be removed.

Figure 7 shows a side wall lance 62 secured to the opening 32a in the T piece 30 of the table 18. The side lance has a spray bar 63, which is operable to be twisted around the longitudinal axis of the opening 32a of the T-piece, as well as being tiltable in a forward/backward direction to direct cleaning fluid forwards. In use, the side wall lance is used to spray and clean low walls, which would not be possible with a cleaning attachment extending upwards from the table 18.

In use, the side wall lance 62 is angled forwards slightly with an upper prong 64a leading a lower prong 64b so that dirty water from the wall is guided downwards by water sprayed from the prongs, in a similar way to that mentioned in Figure 6.

Figure 8 shows a swan-neck spray attachment 66 which is secured to the table 18 by means of the opening 32b in the T-piece 30. The swan-neck attachment 68 includes spray bar 67 having prongs the same as those described in relation to the side wall lance 62. The swan-neck attachment 66 allows very low ceilings and walls to be sprayed which it would not be possible to spray with an attachment extending from the top of the table 18.

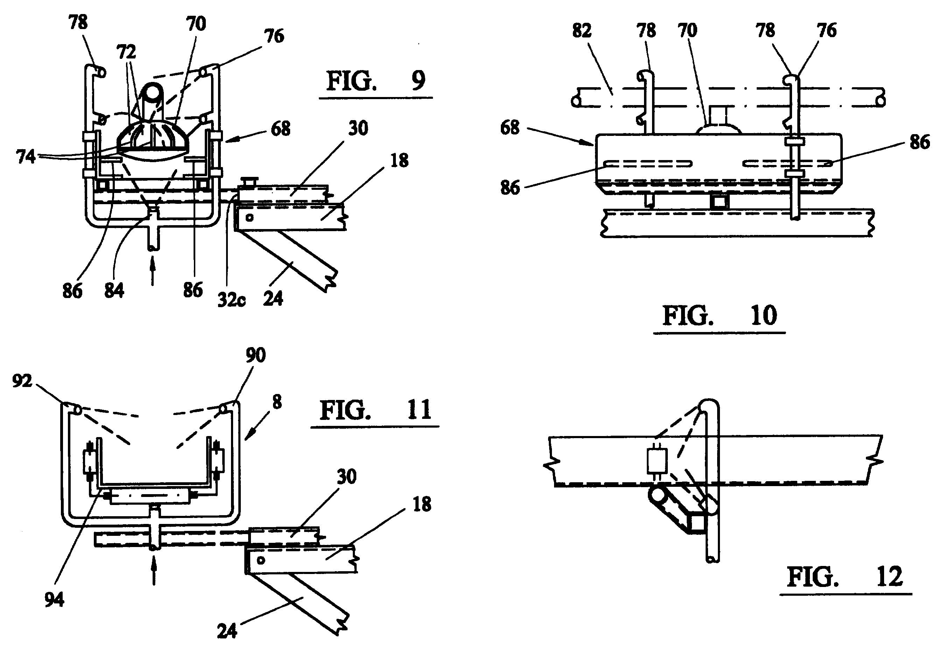

Figures 9 and 10 show a pan washing attachment 68, which is secured to the opening 32c in T-piece 30 of the table 18. The pan washing attachment has an elongate structure which is generally u-shaped in cross-section. This shape is used so that the pan washing attachment 68 can be located beneath and to either side of a pan feed system for feeding chickens, which is usually secured to the ceiling of a chicken house and can be raised and lowered on a pipe (not shown) as desired. The pan 70 typically comprises compartments 72 which have partitions 74 between them. The partitions 74 typically become very dirty with the food and dust arising in a chicken house and needs a great amount of cleaning. Each pan 70 can rotate about a vertical axis from its supply pipe. This fact is used to good effect in the pan washing attachment 68.

The pan washing attachment 68 comprises a left hand pair of jets 78 (see Figure 10) and a right hand pair of jets 76. Upper portions 80 of both of the jets are directed downwards onto a spine 82 (see Figure 10) on which a plurality of pans are supported. These upper jets clean the top of the spine 82. The left hand jets 78 are located forwards of their corresponding right hand jets 76, so that the left hand jet sprays the left hand side of each pan 70 first. The spray from the jets is directed forwards, which causes the pan 70 to rotate on its pipe, thereby causing all of the side walls facing the jet to be sprayed as the pan turns. The pan washing attachment 68 is moved along a series of pans supported on the spine 82 by driving the tractor 12. As this happens, the right hand jets 76 start to spray the partitions 74 from the right hand side of the pan 70 which cause the opposite side of the partition 74 to be sprayed and causes the pan 70 to rotate in the opposite direction. In this way both of sides of each partition 74 are sprayed and cleaned.

A base jet 84 is provided at the base of the "u" of the pan washing attachment 68 to wash the base of each of the pans 70.

If the pans 70 are suspended very close to the spine 82, then it is only necessary to secure the pan washing attachment 68 to the table 18 and raise the table 18 by means of the scissor arrangement up to the series of pans. The tractor 12 can then be driven along the length of the series of pans 70 so that all of the pans 70 can be washed.

Guide bars 86 are provided below the left and right hand jets 78 and 76. The guide bars are provided so that they located beneath the pans 70 to make it easier to locate the pan washing attachment 68 relative to the pans.

Figures 11 and 12 show a trough washing attachment 88 which has a similar u-shaped construction to the pan-washing attachment 68. The trough washing attachment 88 differs in that only a single left hand jet 92 and a single right hand jet 90 is provided. There is also a bottom jet as described above.

In use, water sprayed from the left hand jet 92 is angled from its jet to spray the outer wall of a trough 94 closest to the jets 90 and the inner wall of the trough 94 which is on the opposite side to the jet. In a similar way, the right hand jet 90 is arranged to spray the outside of the trough closest to it and the inside opposite wall of the trough 94.

As is the case with the pan washing attachment 68 the jets are directed forwards so that water is directed away from a user driving the tractor, on which the cleaning machine is mounted. The tractor is positioned beneath the trough 94, the trough washing attachment 88 is raised to the level of the trough 94 and the tractor is driven along the trough to allow cleaning thereof.

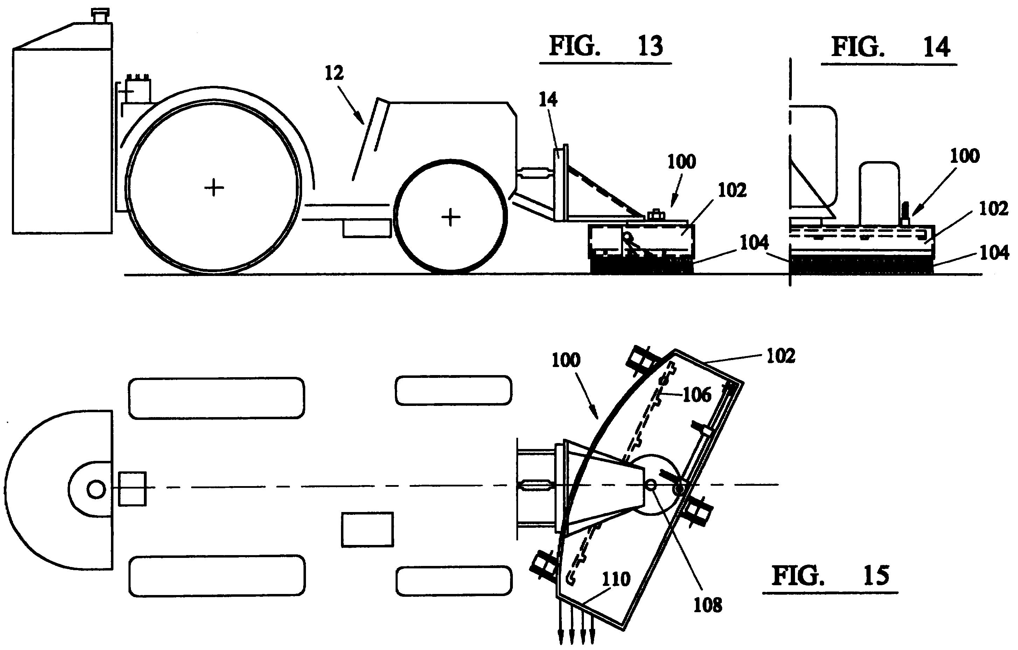

Figures 13, 14 and 15 show an alternative embodiment of cleaning machine 100, which mounts on the front of the tractor 12 using the A frame 14 mentioned above.

The cleaning machine 100 comprises a housing 102 which is generally rectangular. A lower skirt of the housing is made of stiff nylon brushes 104. Inside the housing 102 a high pressure spray bar 106 is secured to an upper side of the housing 102 and extends across the length of the housing.

The housing 102 is mounted on a swivel bearing 108 which allows the housing 102 to be turned from side to side using hydraulic power, or manually.

In use, the cleaning machine 100 is angled as shown in Figure 15 and water and/or cleaning fluids are sprayed from the spray bar 104. The nylon brushes 104 prevent a mist of spray leaving the housing 102, which could otherwise cause visibility problems for a driver of the tractor 12. The tractor 12 is driven along the floor of the building e.g. a chicken house. Dirt on the floor passes under the nylon brushes 104 and is hit by spray from the spray bar 106. Because the spray bar 106 is placed at an angle, dirty water tends to move to the end 110 of the housing 102 which is angled backwards. The dirty water is then guided out of the housing 102 from the right hand side 110. The dirty water can then be washed away leaving the clean floor behind.

The power of the water issuing from the spray bar 106 has an advantageous scouring effect on the floor. This scouring would normally result in a mist which would obscure a users vision and also cause dirty from the floor to be thrown up in the mist. These disadvantages are avoided by the cleaning machine 100 because of the presence of the nylon brushes 104 which prevent the mist leaving the housing 102, but allow the dirt on the floor to pass beneath the brushes to be sprayed within the housing 102.

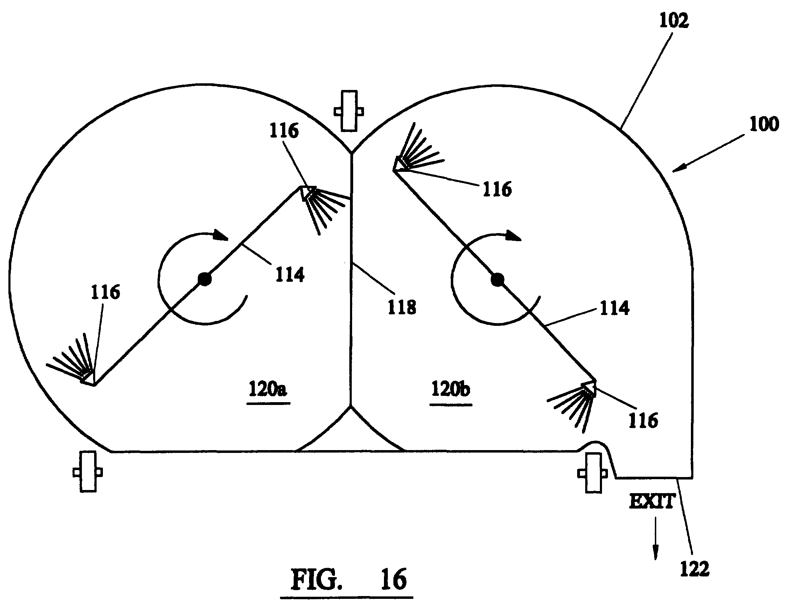

Figure 16 shows an alternative arrangement of washing machine 100. In this arrangement two rotationally mounted spray arms 114 are provided. Jets 116 at each end of each spray arm 114 spray cleaning fluid downwards towards the surface to be cleaned and forwards slightly. The spray arms 114 are driven in the direction of the forward spray. This driving is against the reactive pressure caused by the jets firing water forwards. By driving the jets forward in the direction of the spray of water an additional scouring effect is produced than would otherwise be the case with jets which were allowed to drive themselves in a rotational movement.

A one way door 118 is located between two compartments 120a and 120b, of the housing 102. Water containing dirt scoured from the surface being cleaned is allowed to exit the compartment 120a into compartment 120b. An exit door 122 is provided from the compartment 120b at the rear of the housing 102. The provision of such an exit isolates the location of dirty water issuing from the housing 102,which assists in subsequent cleaning and removal of the dirty water.

The revised arrangement may otherwise be used in the same manner as the cleaning machine 100.

The cleaning machines 10 and 100 may, instead of a tank have a large rotating brush secured to the rear, for cleaning and sweeping up loose material.

The tank may have 3 take-off points from the water pump of the tank 16. One may be for the cleaning machine and two others for hand held sprays for use in cleaning difficult or inaccessible places.

Two tanks 16 may be provided to allow one tank to be used whilst another is filled.

The cleaning machines 10 and 100 assist in cutting down the spread of bacteria in a chicken house, because less people are used and an operator is sat on the tractor 12, rather than walking on the floor, which may transfer bacteria to the chicken house form his footwear. Also the cleaning machine can be sterilised after use before moving to a different chicken house.

The cleaning machine 100 can have many uses other than use described in relation to the cleaning of a chicken house. Both indoor and outdoor uses can be envisaged, for street cleaning or for general heavy duty cleaning within a building.

Likewise, the cleaning machine 10 described above has many uses in relation to the cleaning of the interior of a structure, or even the exterior of a structure. The use in relation to chicken houses is only one example.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A cleaning machine comprises an attachment means for attaching the cleaning machine to a vehicle, and adjustable cleaning device support means which are operable to receive a cleaning device and supply cleaning fluid thereto, wherein the cleaning device support means are operable to adjust the height of a cleaning device supported by the cleaning device support means.

2. A cleaning machine as claimed in claim 1, which includes a cleaning device attached to the cleaning device support means.

3. A cleaning machine as claimed in either claim 1 or 2, in which the cleaning device support means include a support surface which is arranged to receive a cleaning device.

4. A cleaning machine as claimed in claim 3, in which the support surface is vertically adjustable by means of a length adjustable support arrangement.

5. A cleaning machine as claimed in any preceding claim, in which the cleaning device support means includes more than one cleaning device receiving portion.

6. A cleaning machine as claimed in any preceding claim, in which the cleaning device support means includes one or more of a substantially vertically aligned cleaning device receiving portion, a substantially forward aligned cleaning device receiving portion, and a substantially laterally aligned cleaning device receiving portion.

7. A leaning machine as claimed in any preceding claim, which includes a cleaning device comprising at least two laterally spaced projections for delivering cleaning fluid to a surface to be cleaned.

8. A cleaning machine as claimed in claim 7, in which the cleaning device is operable to tilt relative to the support surface.

9. A cleaning machine as claimed in any one of claims 6 to 8 which includes one or more cleaning devices supplied for subsequent fitting to the cleaning machine.

10. A cleaning machine as claimed in any one of claims 1 to 9, which is integral with a vehicle.

11. A cleaning machine comprises cleaning fluid ejection means located in a housing having a substantially open bottom portion, wherein the cleaning fluid ejection means are mounted for rotation and are operable to eject cleaning fluid generally forwards onto a surface to be cleaned and the cleaning fluid ejecting means are operable to be driven in the same forward direction.

12. A cleaning machine as claimed in claim 11, in which the fluid ejection means includes two fluid ejection members, which are located side by side.

13. A cleaning machine as claimed in claim 12, in which the two fluid ejection members are located in separate sections of the housing.

14. A cleaning machine as claimed in claim 13, in which a one way opening is provided between the separate sections, to allow cleaning fluid to pass between the sections in one direction only.

15. A cleaning machine comprises attachment means for attaching the cleaning machine to a vehicle and cleaning fluid ejection means located in a housing having a substantially open bottom portion, wherein at least front and side lower edges of the housing have flexible skirts which are arranged to allow dirt on a surface to be cleaned to enter the housing and to deter the exit of mist generated by the cleaning fluid ejection means.

16. A cleaning machine as claimed in claim 15, in which the cleaning fluid ejection means comprise at least one spray bar, which is operable to turn about a generally vertical axis, to provide a leading end of said fluid ejection means and a trailing end thereof.
